# EUROPEAN PATENT APPLICATION

(11) **EP 4 485 734 A1**
(43) Date of publication of application: **01.01.2025**
(21) Application number: 22928819.6
(22) Date of filing: 31.08.2022
(51) Int. Cl.: H02J 3/14, H02J 13/00

(54) **POWER CONVERTER, POWER SYSTEM, AND CONTROL METHOD FOR POWER CONVERTER**

(30) Priority: 22.02.2022 JP 2022026155
(71) Applicant: FURUKAWA ELECTRIC CO., LTD., Tokyo 100-8322 (JP)
(72) Inventor: ITO, Mitsuhiro, Tokyo 100-8322 (JP)
(74) Representative: SSM Sandmair
(86) International application number: PCT/JP2022/032872
(87) International publication number: WO 2023/162298

(57) **Abstract**

Peak shaving is implemented with a minimized calculation load. An electric power converter includes: an electric power conversion unit configured to convert alternating-current power input from an electric power element, which supplies the alternating-current power, into direct-current power to output the input direct-current power to a direct-current bus; a control unit configured to control the electric power conversion unit to execute control of an output from the electric power conversion unit, based on a reference function having a drooping characteristic defined according to an input value and on either voltage or electric power in a bus to which the electric power conversion unit is connected; and an update unit configured to update the reference function, the update unit being configured to update a maximum output of the electric power conversion unit, based on contracted electric power of the electric power element and on electric power of an alternating-current load that consumes the alternating-current power supplied by the electric power element, the maximum output being defined by the reference function.

## Description

### Field

The present invention relates to electric power converters, electric power systems, and methods of controlling the electric power converters.

### Background

A system disclosed in Patent Literature 1, for example, is one of systems that convert alternating-current power from electric power systems into direct-current power to charge storage batteries. This system implements peak shaving by controlling electric power supplied from another storage battery to a storage battery to be charged such that electric power supplied from an AC/DC converter, which converts alternating-current power into direct-current power, to the storage battery to be charged becomes less than a threshold.

Specifically, the AC/DC converter determines drooping characteristics of a DC/DC converter connected to the storage battery to be charged as characteristics, by which the electric current value in the storage battery is increased as the voltage in the bus increases, that is, charging characteristics, and determines drooping characteristics of a DC/DC converter connected to the other storage battery as characteristics, by which the electric current value in the storage battery is decreased as the voltage in the bus increases, that is, discharging characteristics. Each of the DC/DC converters obtains the drooping characteristics determined by the AC/DC converter and controls the electric current in the storage battery according to the drooping characteristics, an electric current corresponding to a shortfall in the discharge from the other storage battery is thereby supplied from the AC/DC converter to the storage battery to be charged, and electric power purchased from an electric power system is thus able to be lessened.

### Citation List

### Patent Literature

Patent Literature 1: Japanese Unexamined Patent Application Publication No. 2021-141761

### Summary

### Technical Problem

Networks that supply electric power include an electric power network (a direct-current grid) having various direct-current devices connected to a direct-current bus via electric power converters that are DC/DC converters, the various direct-current devices being, for example, photovoltaic (PV) devices that are power generation devices to generate electric power using renewable energy, stationary electric storage devices, and electric vehicles (EVs). If the technique disclosed in Patent Literature 1 is applied to a case where an electric power system has been connected to a direct-current bus via an AC/DC converter, the AC/DC converter will be subjected to a load by having to determine drooping characteristics of DC/DC converters connected to chargeable and dischargeable devices.

The present invention has been made in view of the above and an object thereof is to implement peak shaving with a minimized calculation load.

### Solution to Problem

To solve the problem described above and to achieve the object, an electric power converter according to one aspect of the present invention includes: an electric power conversion unit configured to convert alternating-current power input from an electric power element, which supplies the alternating-current power, into direct-current power to output the input direct-current power to a direct-current bus; a control unit configured to control the electric power conversion unit to execute control of an output from the electric power conversion unit, based on a reference function having a drooping characteristic defined according to an input value and on either voltage or electric power in a bus to which the electric power conversion unit is connected; and an update unit configured to update the reference function, wherein the update unit is configured to update a maximum output of the electric power conversion unit, based on contracted electric power of the electric power element and on electric power of an alternating-current load that consumes the alternating-current power supplied by the electric power element, the maximum output being defined by the reference function.

In the electric power converter according to one aspect of the present invention, the update unit may be configured to update the maximum output of the electric power conversion unit, according to integral electric energy of electric power supplied by the electric power element to the electric power conversion unit and the alternating-current load, the maximum output being defined by the reference function.

In the electric power converter according to one aspect of the present invention, the update unit may be configured to increase the maximum output of the electric power conversion unit when the integral electric energy is less than contracted electric energy of the electric power element, the maximum output being defined by the reference function.

In the electric power converter according to one aspect of the present invention, the update unit may be configured to decrease the maximum output of the electric power conversion unit when the integral electric energy is more than contracted electric energy of the electric power element, the maximum output being defined by the reference function.

In the electric power converter according to one aspect of the present invention, the electric power of the alternating-current load may be electric power determined based on a predicted demand at the alternating-current load.

An electric power system according to one aspect of the present invention includes: the electric power converter; a direct-current bus to which the electric power converter is connected; a direct-current power converter that is connected to the direct-current bus, the direct-current power converter being configured to convert direct-current power input from the direct-current bus to output the converted direct-current power; and an electric power element connected to the direct-current power converter and capable of supplying electric power, consuming electric power, or being charged with electric power.

A method of controlling an electric power converter according to one aspect of the present invention is a method of controlling an electric power converter including: an electric power conversion unit configured to convert alternating-current power input from an electric power element, which supplies the alternating-current power, into direct-current power to output the input direct-current power to a direct-current bus; a control unit configured to control the electric power conversion unit to execute control of an output from the electric power conversion unit, based on a reference function having a drooping characteristic defined according to an input value and on either voltage or electric power in a bus to which the electric power conversion unit is connected; and an update unit configured to update the reference function, the method including updating a maximum output of the electric power conversion unit, based on contracted electric power of the electric power element and on electric power of an alternating-current load that consumes the alternating-current power supplied by the electric power element, the maximum output being defined by the reference function.

### Advantageous Effects of Invention

The present invention enables peak shaving with a minimized calculation load.

### Brief Description of Drawings

FIG. 1 is a diagram illustrating a configuration of an electric power system according to a first embodiment.
FIG. 2 is a diagram illustrating a configuration of an electric power converter illustrated in FIG. 1.
FIG. 3 is a diagram illustrating a configuration of a control unit illustrated in FIG. 2.
FIG. 4 is a diagram illustrating an example of an electric power conversion characteristic.
FIG. 5 is a sequence diagram illustrating an example of a method of controlling the electric power system.
FIG. 6 is a diagram illustrating an example of change in integral electric energy of electric power supplied from an electric power element.
FIG. 7A is a diagram illustrating an example of an electric power conversion characteristic.
FIG. 7B is a diagram illustrating an example of an electric power conversion characteristic.
FIG. 8 is a diagram illustrating an example of change in integral electric energy of electric power supplied from an electric power element.
FIG. 9A is a diagram illustrating an example of an electric power conversion characteristic.
FIG. 9B is a diagram illustrating an example of an electric power conversion characteristic.

### Description of Embodiments

Embodiments of the present invention will be described hereinafter by reference to the drawings. The present invention is not to be limited by the embodiments described hereinafter. Furthermore, the same reference sign is assigned, as appropriate, to any portions that are the same, throughout the drawings.

### First Embodiment

### Configuration of Electric Power System

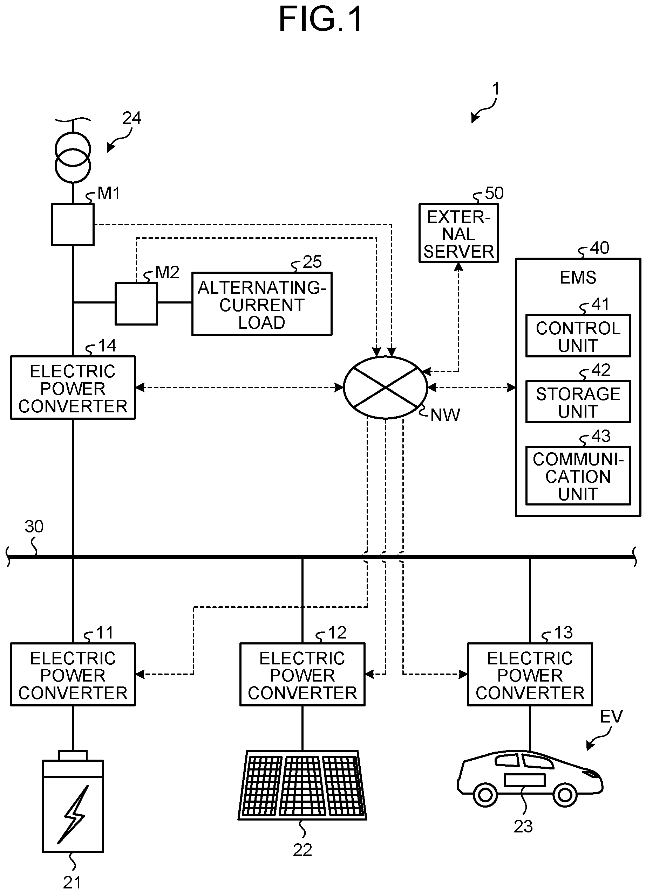

FIG. 1 is a diagram illustrating a configuration of an electric power system according to a first embodiment. An electric power system 1 includes: electric power converters 11, 12, 13, and 14; electric power elements 21, 22, 23, and 24; an alternating-current load 25; a bus 30; and smart meters M1 and M2. The electric power system 1 also includes an energy management system (EMS) 40. The EMS 40 is an example of a central control apparatus.

The electric power converters 11 to 13 are DC/DC converters that convert voltage of direct-current power. The electric power converter 14 is an AC/DC converter that implements conversion between direct-current voltage and alternating-current voltage. The electric power converters 11, 12, 13, and 14 each have a function of communicating information by wire or wirelessly. Configurations and functions of the electric power converters 11, 12, 13, and 14 will be described in detail later.

The bus 30 is a direct-current bus in the electric power system 1 and has the electric power converters 11 to 14 connected thereto. An electric power network including a direct-current grid is formed in the electric power system 1.

The electric power element 21 is, for example, a stationary electric storage device capable of supplying, consuming, and being charged with electric power, and is connected to the electric power converter 11. The stationary electric storage device is an example of an electric storage device permanently installed in a facility. The electric power converter 11 has a function of converting voltage of direct-current power supplied by the electric power element 21, outputting the converted voltage to the bus 30, converting voltage of direct-current power supplied from the bus 30, and outputting the converted voltage to the electric power element 21 to charge the electric power element 21. The electric power converter 11 is an example of a direct-current power converter.

The electric power element 22 is, for example, a photovoltaic device capable of generating and supplying electric power and is connected to the electric power converter 12. The photovoltaic device is an example of a power generation device that generates electric power by using renewable energy. The electric power converter 12 has a function of converting voltage of direct-current power supplied by the electric power element 22 and outputting the converted voltage to the bus 30.

The electric power element 23 is, for example, an in-vehicle electric storage device capable of supplying, consuming, and being charged with electric power and is connected to the electric power converter 13. The in-vehicle electric storage device is installed in an electric vehicle EV and is an example of a movable non-stationary electric storage device. The electric power converter 13 has a function of converting voltage of direct-current power supplied by the electric power element 23, outputting the converted voltage to the bus 30, converting voltage of direct-current power supplied from the bus 30, and outputting the converted voltage to the electric power element 23 to charge the electric power element 23. The electric power converter 13 is provided in, for example, a charging station or a residential charging facility, but may be installed in the electric vehicle EV. The electric power converter 13 is an example of a direct-current power converter.

The electric power element 24 is, for example, a commercial electric power system and is connected to the electric power converter 14. The electric power converter 14 converts alternating-current power supplied by the electric power element 24 into direct-current power, outputs the direct-current power to the bus 30, converts direct-current power supplied from the bus 30 to alternating-current power, and outputs the alternating-current power to the electric power element 24. Output of electric power from the bus 30 to the electric power element 24 is sometimes called a reverse power flow.

The alternating-current load 25 is a device that operates with alternating-current power and is connected to the electric power element 24. The alternating-current load 25 is, for example, an electric device or a light fixture in a residence.

The smart meters M1 and M2 are wattmeters having a communication function. The smart meters M1 and M2 have a function of communicating information via a network NW by wire or wirelessly. The smart meter M1 measures electric energy supplied from the electric power element 24. The smart meter M2 measures electric energy consumed by the alternating-current load 25. The electric energy measured by the smart meters M1 and M2 is transmitted to, for example, the EMS 40 or an external server 50.

The EMS 40 has a function of performing integrated management of states of the electric power system 1. The EMS 40 includes a control unit 41, a storage unit 42, and a communication unit 43.

The control unit 41 performs various kinds of arithmetic processing for implementing the function of the EMS 40, and is configured to include, for example, a processor, such as a central processing unit (CPU), an application specific integrated circuit (ASIC), a fieldprogrammable gate array (FPGA), a digital signal processor (DSP), or a graphics processing unit (GPU). Functions of the control unit 41 are implemented as functional units by the control unit 41 reading and executing various programs from the storage unit 42.

The storage unit 42 includes, for example, a read only memory (ROM) where various programs and data used by the control unit 41 for the arithmetic processing are stored. Furthermore, the storage unit 42 includes, for example, a random access memory (RAM) used as working space for the arithmetic processing by the control unit 41 and for storage of results of the arithmetic processing by the control unit 41. The storage unit 42 may include an auxiliary storage, such as a hard disk drive (HDD) or a solid state drive (SSD).

The communication unit 43 includes a communication module that performs communication of information by wire or wirelessly. The communication unit 43 performs communication of information to and from, for example, the electric power converters 11 to 14, the smart meters M1 and M2, and the external server 50, via the network NW that is, for example, an Internet network or a mobile phone network.

The external server 50 is a server provided outside the electric power system 100. The external server 50 is, for example, an information processing apparatus configured to function as an EMS in another electric power system, or an information processing apparatus that includes a database and functions as a data server for the EMS 40. The external server 50 stores various kinds of information that possibly have an influence on use of the electric power system 100.

### Configuration of Electric Power Converter

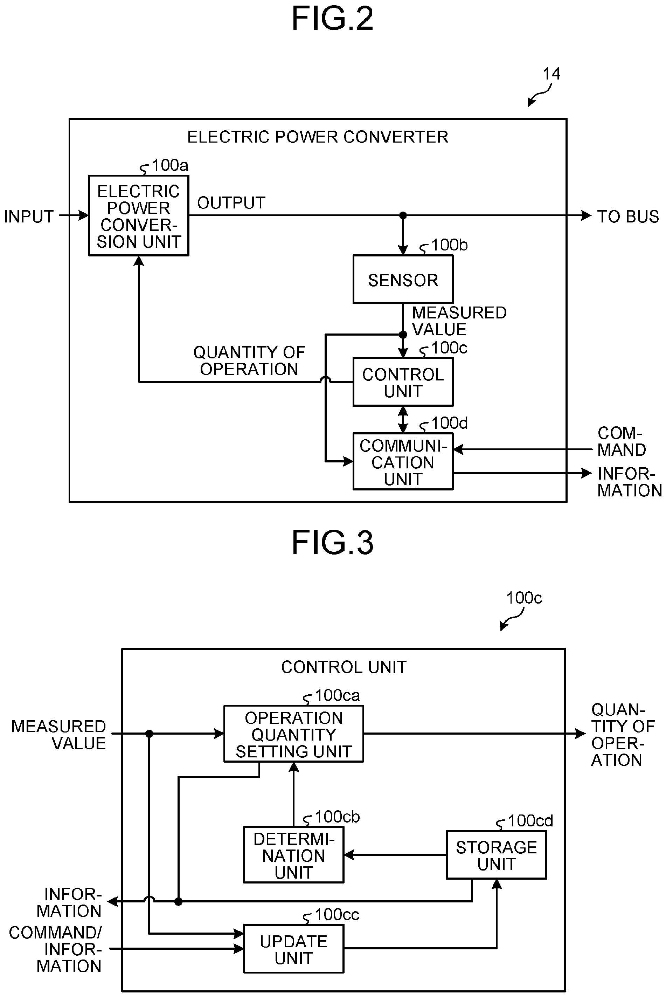

A specific configuration of the electric power converter 14 will be described next. FIG. 2 is a diagram illustrating a configuration of the electric power converter 14. The electric power converter 14 has an electric power conversion unit 100a, a sensor 100b, a control unit 100c, and a communication unit 100d.

The electric power conversion unit 100a implements AC/DC conversion of converting alternating-current power supplied from the electric power element 24 into direct-current power and outputting the direct-current power to the bus 30. Furthermore, the electric power conversion unit 100a also performs DC/AC conversion of converting direct-current power supplied from the bus 30 into alternating-current power and outputting the alternating-current power to the electric power element 24. The electric power conversion unit 100a is formed of an electric circuit including, for example, a coil, a capacitor, a diode, and a switching element. The switching element is, for example, a field-effect capacitor or an insulated gate bipolar transistor. An electric power conversion characteristic of the electric power conversion unit 100a is able to be controlled by, for example, pulse width modulation (PWM) control.

The sensor 100b measures an electric characteristic value of electric power on one side of the electric power conversion unit 100a, the one side being closer to the bus 30. Therefore, the sensor 100b measures an electric characteristic value of electric power input to the electric power converter 14 or output from the electric power converter 14. The sensor 100b is capable of measuring, for example, electric current values, voltage values, and electric power values. The sensor 100b is an example of a measurement unit that obtains a measured value. The sensor 100b outputs measured values of electric characteristic values to the control unit 100c.

For implementation mainly of an electric power conversion function of the electric power converter 14, the control unit 100c is configured to include: a processor that performs various kinds of arithmetic processing for controlling operation of the electric power conversion unit 100a; and a storage unit. The examples mentioned above as the components of the control unit 41 and the storage unit 42 may be used respectively for the processor and the storage unit. Functions of the control unit 100c are implemented as functional units, by the processor reading and executing various programs from the storage unit. For example, on the basis of a reference function, the control unit 100c controls the electric power conversion characteristic of the electric power conversion unit 100a. Specifically, the control unit 100c outputs a PWM signal to the electric power conversion unit 100a to implement PWM control of the electric power conversion unit 100a, the PWM signal including information on a quantity of operation (for example, a duty ratio) for the PWM control. The control unit 100c may directly output the quantity of operation to the electric power conversion unit 100a or may output the quantity of operation to the electric power conversion unit 100a via another functional unit (for example, a loop control unit) not illustrated in the drawings.

FIG. 3 is a diagram illustrating a configuration of the control unit 100c, the configuration being related mainly to the electric power conversion function. The control unit 100c includes an operation quantity setting unit 100ca, a determination unit 100cb, and an update unit 100cc, which are functional units implemented in software by execution of programs, as well as a storage unit 100cd.

The update unit 100cc causes the storage unit 100cd to store reference function information and control method information that are included in an update command input from the communication unit 100d to update reference function information and control method information that have been stored in the storage unit 100cd. The update unit 100cc also updates the reference function information that has been stored in the storage unit 100cd, on the basis of a measured value supplied from the sensor 100b. The reference function information herein is various kinds of information for determining droop functions composing the reference function and will be described in detail later. Furthermore, the update unit 100cc causes the storage unit 100cd to store contracted electric power of the electric power element 24 and rated electric power of the alternating-current load 25, which have been transmitted from the EMS 40 and received by the communication unit 100d, for example.

The determination unit 100cb makes a determination of a feedback control method to be performed by the operation quantity setting unit 100ca, on the basis of the control method information stored in the storage unit 100cd, and outputs a result of this determination as determination information. This feedback control method may be: feedback control (hereinafter, referred to as droop P control) of determining target electric power Pref (an example of a target value) on the basis of a measured voltage value Vo from the sensor 100b and the reference function information and setting a quantity of operation so that a difference between Pref and a measured value Po (an example of a control target value) of electric power from the sensor 100b becomes equal to or less than an acceptable range; or feedback control (hereinafter, referred to as droop V control) of determining a target voltage Vref (an example of a target value) on the basis of a measured value Po of electric power from the sensor 100b and the reference function information and setting a quantity of operation so that a difference between the target voltage Vref and a measured voltage value Vo (an example of a control target value) from the sensor 100b becomes equal to or less than an acceptable range. The above described control method information is information representing the droop P control or droop V control, and the determination unit 100cb makes the determination of the feedback control method on the basis of the control method information that has been stored in the storage unit 100cd and outputs, as determination information, the result of the determination to perform the droop P control or the result of the determination to perform the droop V control.

The operation quantity setting unit 100ca sets the feedback control method according to the determination information input from the determination unit 100cb, sets a quantity of operation on the basis of a measured value input from the sensor 100b and the reference function information obtained from the storage unit 100cd, and outputs the set quantity of operation to the electric power conversion unit 100a. Feedback control performed by the operation quantity setting unit 100ca may be executed by using a publicly known technique, such as PID control executed by reading parameters, such as proportional gain, integral time, and derivative time that have been stored in the storage unit 100cd, for example.

The storage unit 100cd or the operation quantity setting unit 100ca outputs information, such as information related to electric power conditions and the reference function information, to the communication unit 100d.

The other electric power converters 11 to 13 may each have a configuration similar to that of the electric power converter 14. However, the electric power conversion units 100a of the electric power converters 11 to 13 perform DC/DC conversion of converting voltage of DC electric power input from electric power elements that are being discharged and outputting the converted voltage to the bus 30. Furthermore, the electric power conversion units 100a of the electric power converters 11 and 13 are capable of performing DC/DC conversion of voltage of DC power input from the bus 30, outputting the converted voltage, and charging the electric power elements.

### Characteristics of Reference Function

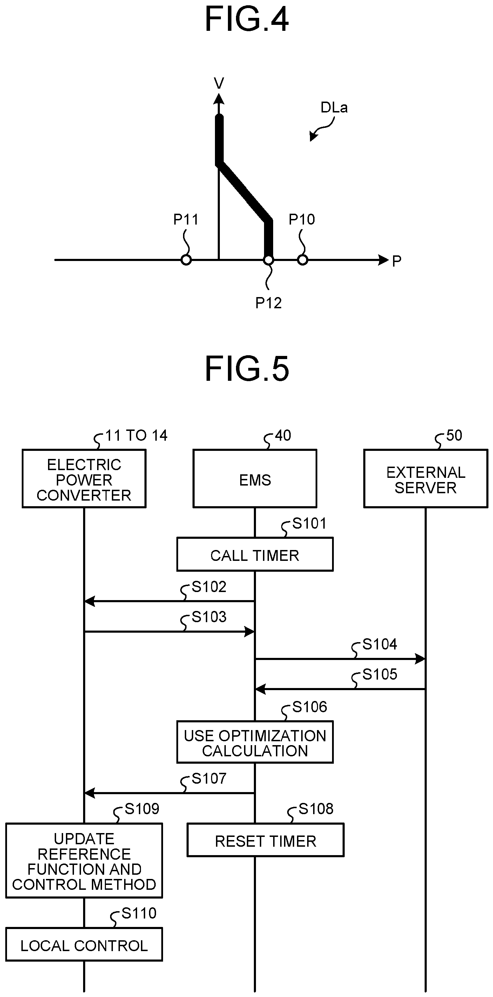

The reference function that serves as a basis for the control unit 100c to control the electric power conversion characteristic of the electric power conversion unit 100a will be described next. FIG. 4 is a diagram illustrating an example of an electric power conversion characteristic.

FIG. 4 is a diagram illustrating a V-P characteristic that is a relation between electric power (P) and voltage (V) on one side of the electric power conversion unit 100a that the electric power converter 14 has, the one side being closer to the bus 30, and FIG. 4 illustrates the electric power conversion characteristic of the electric power conversion unit 100a that the electric power converter 14 has. Herein, P is a positive value in a state where the electric power conversion unit 100a is supplying electric power to the bus 30, that is, in a state where the electric power conversion unit 100a is converting alternating-current power from the electric power element 24 that is a commercial electric power system into direct-current power, supplying the direct-current power to the bus 30, and using electric power from the commercial electric power system, and P is a negative value in a state where electric power is being supplied from the bus 30, that is, in a reverse power flow state.

A line DLa illustrated in FIG. 4 is a straight line bent in the middle or a curved line. A reference function represented by this line DLa includes connected lines representing three droop functions defined according to intervals of input values, the three droop functions having drooping characteristics different from one another, and the line DLa is determined by the reference function information.

The reference function information includes, for example, coordinate information on boundaries of the droop functions at coordinates having P along the horizontal axis and V along the vertical axis, intercept information on the droop functions, information on slopes (that is, droop coefficients), and information on forms (straight lines or a curved line, for example). The control unit 100c in the electric power converter 14 performs control such that the electric power conversion characteristic of the electric power conversion unit 100a follows the characteristic of the reference function represented by the line DLa. That is, the control unit 100c in the electric power converter 14 controls the electric power conversion unit 100a such that an operating point defined by a value of V and a value of P is positioned on the line DLa.

The electric power converters 11 to 13 also store reference function information including connected lines representing droop functions correspondingly to the electric power elements connected thereto and control their electric power conversion units 100a such that operating points are positioned on the lines represented by the reference function information.

### Control Method

A method of controlling the electric power converters 11, 12, 13, and 14 and a method of controlling the electric power system 1 will be described next. What may be executed in the electric power system 1 are: so-called local control where the electric power converters 11, 12, 13, and 14 individually perform autonomous decentralized control; and centralized control where the EMS 40 performs coordinated control of the electric power converters 11, 12, 13, and 14 according to the electric power conditions of the electric power system 1. For example, local control is repeatedly executed on a comparatively short cycle, and the centralized control is executed at longer intervals than those of the cycle of the local control. The local control is also called primary control and the centralized control is also called secondary control. Programs cause a processor to execute these control methods, for example, at the electric power converters or the EMS 40.

### Local Control

A method of controlling the electric power converters 11, 12, 13, and 14 in the local control will be described with respect to the electric power converter 14 serving as an example. A control method similar to that described hereinafter may be executed as appropriate at any of the other electric power converters 11 to 13. In a case where the electric power element 22 is an element that does not control the amount of electric power generated in terms of efficiency, for example, like a photovoltaic device, control by the maximum power point tracking (MPPT) scheme may be executed, the control being where the electric power converter 12 is caused to operate such that in response to input of electric power corresponding to the amount of electric power from the electric power element 22 and generated by the electric power element 22, output electric power to the bus 30 is maximized with that amount of electric power generated.

In the method of controlling the electric power converter 14, the control unit 100c executes a control step of controlling the electric power conversion characteristic of the electric power converter 14, that is, the electric power conversion characteristic of the electric power conversion unit 100a, on the basis of the reference function. Specifically, at the control unit 100c, the operation quantity setting unit 100ca obtains a measured value from the sensor 100b. Subsequently, at the control unit 100c, the operation quantity setting unit 100ca obtains the reference function information from the storage unit 100cd. Subsequently, at the control unit 100c, on the basis of the control method information stored in the storage unit 100cd, the determination unit 100cb determines a feedback control method. Subsequently, at the control unit 100c, the operation quantity setting unit 100ca obtains determination information output from the determination unit 100cb, sets, on the basis of the measured value and the reference function information, a quantity of operation for executing feedback control by a control method based on the determination information obtained, and outputs the quantity of operation set, to the electric power conversion unit 100a. Control of the electric power conversion unit 100a is thereby executed.

### Peak Shaving by Electric Power Converter 14

Peak shaving implemented by the electric power element 24 will be described next. On the basis of the contracted electric power of the electric power element 24 and the rated electric power of the alternating-current load 25, which have been received from the EMS 40 and stored in the storage unit 100cd beforehand, the update unit 100cc determines the maximum output of the reference function. For example, in a case where the contracted electric power of the electric power element 24 is electric power P10 illustrated in FIG. 4 and the rated electric power of the alternating-current load 25 is electric power P11 illustrated in FIG. 4, the update unit 100cc updates the reference function that has been transmitted from the EMS 40 and stored in the storage unit 100cd so that electric power P12 that is the maximum output defined by the reference function becomes "electric power P10 - electric power P11".

Because the electric power converter 14 controls the electric power conversion unit 100a such that the operating point is positioned on the line DLa, the maximum electric power output to the bus 30 via the electric power converter 14 from the electric power element 24 is reduced to electric power P12 that is electric power lower than the electric power P12 that is the contracted electric power. Because electric power supplied from the electric power element 24 to the bus 30 then will not exceed the contracted electric power, peak shaving is achieved. Furthermore, because the electric power converter 14 that is an AC/DC converter does not need to determine reference functions of the electric power converters 11 and 13 for implementing peak shaving, even if the pair of the electric power converter 11 and the electric power element 21 or the pair of the electric power converter 13 and the electric power element 23 is added, the load on the electric power converter 14, which is the AC/DC converter, in the peak shaving is able to be minimized. Furthermore, because the electric power converter 14 does not need to perform communication to and from the electric power converter 11 and the electric power converter 13 for the peak shaving, communication cost is able to be minimized.

### Centralized Control

The centralized control will be described next. In the following example, the EMS 40 provided outside the electric power converters 11, 12, 13, and 14 executes the centralized control by updating, through commands, reference functions and feedback control methods used by the electric power converters 11, 12, 13, and 14 in control. Updating a reference function and a feedback control method through a command means that the command includes reference function information related to the reference function and control method information related to the feedback control method, and updating, by means of the command, part of the reference function or the whole reference function and the feedback control method. The storage unit 100cd of each of the electric power converters 11, 12, 13, and 14 stores the reference function information and the control method information in an updatable manner.

For example, in communication of information between the EMS 40 and the electric power converter 11, 12, 13, or 14, a command signal for updating the reference function includes the reference function information and the control method information. The reference function information is, as described already, coordinate information on boundaries of droop functions, intercept information on the droop functions, information on slopes (that is, droop coefficients), and information on forms (straight lines or a curved line, for example). The control method information is information representing droop P control or droop V control. The command signal transmitted to the electric power converter 14 may include information on the contracted electric power of the electric power element 24, the rated electric power of the alternating-current load 25, and electric energy received by the EMS 40 from the smart meters M1 and M2. The reference function information used in the update and the information on the contracted electric power of the electric power element 24, the rated electric power of the alternating-current load 25, and the electric energy received from the smart meters M1 and M2 have been stored in the storage unit 42 of the EMS 40 and are read and used as appropriate by the control unit 41.

An example of a method of controlling the electric power system 1, the method being the centralized control, will be described next by reference to a sequence diagram in FIG. 5. Firstly, the EMS 40 calls a timer in the EMS 40 to start measuring time (Step S101). Subsequently, the EMS 40 requests each of the electric power converters 11, 12, 13, and 14 for local measurement information (Step S102). The local measurement information is an example of information related to the electric power conditions of the electric power system 1, and includes measured values measured by respective sensors in the electric power converters 11, 12, 13, and 14 and measurement times. Subsequently, each of the electric power converters 11, 12, 13, and 14 transmits the local measurement information to the EMS 40 (Step S103). The EMS 40 stores their local measurement information into the storage unit 42.

Subsequently, the EMS 40 requests the external server 50 for various kinds of information having a possibility of influencing use of the electric power system 1, the various kinds of information being an example of the information related to the electric power conditions of the electric power system 1 (Step S104). In this example, the EMS 40 requests the external server 50 for electric power generation amount and demand prediction information. This electric power generation amount and demand prediction information includes prediction information on the amount of electric power generated and prediction information on a demand for electric power in the electric power system 1, and may include, for example, information on the season, current weather, and future weather forecast in or for the region where the electric power system 1 has been installed. Furthermore, in a case where the external server 50 functions as an EMS of another electric power system, if the use state of that other electric power system has a possibility of influencing the use of the electric power system 1, the electric power generation amount and demand prediction information may include prediction information on the amount of electric power generated and prediction information on a demand for electric power in the other electric power system. Furthermore, in a case where the information on the electric energy measured by the smart meters M1 and M2 is transmitted to the external server 50 instead of the EMS 40, the electric power generation amount and demand prediction information may include the information on the electric energy measured by the smart meters M1 and M2. Furthermore, in a case where the external server 50 stores the information on the contracted electric power of the electric power element 24 and the rated electric power of the alternating-current load 25, the electric power generation amount and demand prediction information may include these pieces of information.

Subsequently, the external server 50 transmits the electric power generation amount and demand prediction information to the EMS 40 (Step S105). The EMS 40 stores the electric power generation amount and demand prediction information into the storage unit 42. Subsequently, the control unit 41 of the EMS 40 reads each piece of information that has been transmitted, that is, for example, the information related to the electric power conditions of the electric power system 1, from the storage unit 42, and executes, on the basis of the pieces of information read, use optimization calculation for the electric power system 1 (Step S106).

The use optimization calculation is executed for application to various conditions. For example, it is assumed that the electric power system 1 is being controlled such that the bus 30 is at an operating point of a predetermined voltage. It is assumed that in this state, the EMS 40 predicts, from the electric power generation amount and demand prediction information, that the region where the electric power element 22, which is a photovoltaic device, has been installed is going to have clear weather and the amount of electric power generated is going to increase, and determines, from the local measurement information obtained from the electric power converter 12 connected to the electric power element 22, that the electric power element 22 can afford to supply electric power. In this case, the EMS 40 determines that the reference function of the electric power converter 11 connected to the electric power element 21 is to be updated so that the electric power element 21 that is a stationary electric storage device is charged at the operating point. Furthermore, in this case, the EMS 40 determines that the reference function of the electric power converter 14 connected to the electric power element 24 is to be updated simultaneously with the above update so that electric power is not supplied from the electric power element 24 that is a commercial electric power system.

Subsequently, the EMS 40 sets, on the basis of a result of the use optimization calculation, reference function information and control method information that are suitable for an electric power converter, for which an update is to be made, the electric power converter being one of the electric power converters 11, 12, 13, and 14, and outputs an update command for a reference function (droop functions) and a feedback control method, the update command including the set reference function information and control method information (Step S107). A command signal transmitted to the electric power converter 14 includes the information on the electric energy received by the EMS 40 from the smart meters M1 and M2 or the external server 50 and the information on the rated electric power of the alternating-current load 25 and the contracted electric power of the electric power element 24. Subsequently, the EMS 40 resets the timer (Step S108). Subsequently, the electric power converter, for which the update is to be made, obtains a command for an update of the reference function and an update of the feedback control method and performs the updates of the reference function and the feedback control method, the electric power converter being one of the electric power converters 11, 12, 13, and 14 (Step S109). In a case where the update command includes the information on the electric energy measured by the smart meters M1 and M2, the information on the rated electric power of the alternating-current load 25, and the information on the contracted electric power of the electric power element 24, the electric power converter 14 performs an update of information on electric energy, rated electric power, and contracted electric power that has been stored.

Subsequently, the electric power converters 11, 12, 13, and 14 each execute local control (Step S110). The electric power converter that has obtained the update command performs local control by using the updated reference function and feedback control method, the electric power converter being one of the electric power converters 11, 12, 13, and 14. On the basis of the information on the rated electric power of the alternating-current load 25 and the contracted electric power of the electric power element 24, the information being included in the update command, the electric power converter 14 updates the reference function so that the electric power P12 that is the maximum output of the reference function becomes "electric power P10 - electric power P11", as described above. Their local control is local control reflecting the electric power conditions of the electric power system 1 and coordinated control of the electric power converters 11, 12, 13, and 14 is thereby achieved.

### Second Embodiment

A second embodiment of the present invention will be described next. An electric power system according to the second embodiment is different from that of the first embodiment in that the electric power converter 14 updates the reference function according to integral electric energy of electric power supplied from the electric power element 24 to the bus 30 and the alternating-current load 25. Other components are the same as those of the first embodiment, these components that are the same as those of the first embodiment will be assigned with the same reference signs, description of these components will be omitted, and the following description will be on differences from the first embodiment.

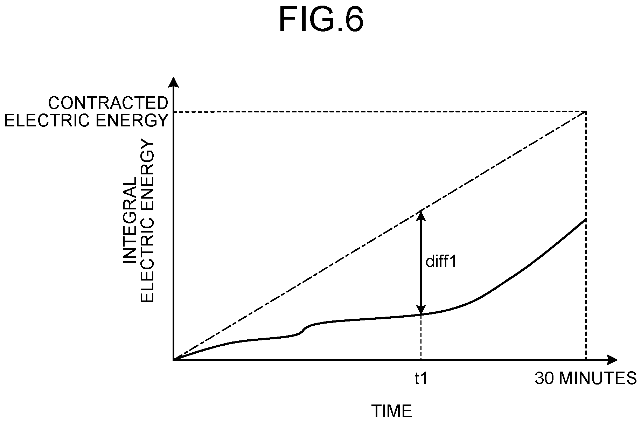

FIG. 6 is a graph illustrating an example of change in integral electric energy of electric power supplied from the electric power element 24 in 30 minutes. A dash-dotted line illustrated in FIG. 6 represents change in integral electric energy in a case where electric power from the electric power element 24 is consumed at constant power consumption such that electric energy supplied by the electric power element 24 equals contracted electric energy of the electric power system 1.

As illustrated in FIG. 6, in a case where the total integral electric energy for the bus 30 and the alternating-current load 25 is less than that upon the consumption of the electric power from the electric power element 24 at the constant power consumption such that the electric energy supplied by the electric power element 24 equals the contracted electric energy, the update unit 100cc of the electric power converter 14 updates the maximum output defined by the reference function.

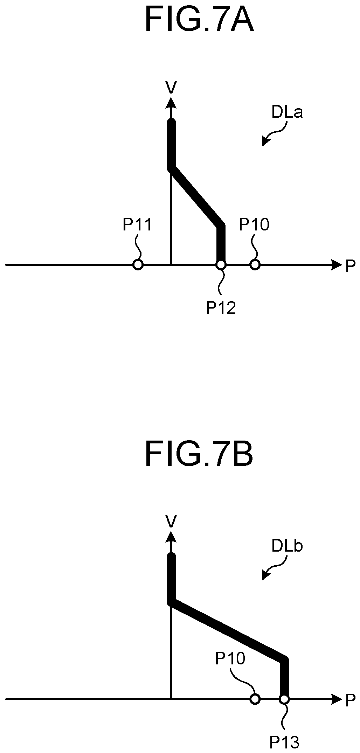

Specifically, the electric power converter 14 resets the integral electric energy every time 30 minutes elapse and updates the reference function to a reference function illustrated in FIG. 7A. The reference function illustrated in FIG. 7A is a reference function that is the same as the reference function illustrated in FIG. 4. Subsequently, the electric power converter 14 obtains the electric energy consumed by the alternating-current load 25 from the EMS 40 on a predetermined cycle. Furthermore, the electric power converter 14 calculates electric energy supplied from the electric power element 24 to the bus 30 on a predetermined cycle, on the basis of a measurement result from the sensor 100b. Subsequently, on the basis of electric energy consumed by the alternating-current load 25 and obtained since resetting of the integral electric energy and the electric energy supplied from the electric power element 24 to the bus 30 and obtained by calculation, the electric power converter 14 calculates integral electric energy of electric power supplied by the electric power element 24 since the resetting of the integral electric energy and generates a graph representing change in the integral electric energy. Every time the electric power converter 14 calculates integral electric energy, the electric power converter 14 calculates a difference between the latest integral electric energy calculated and the integral electric energy represented by the dash-dotted line at the time point of that calculation, and updates the maximum output defined by the reference function if the difference calculated is equal to or larger than a predetermined threshold.

FIG. 7B is a diagram illustrating an example of the reference function of the electric power converter 14, the reference function having been updated. For example, if, at a time point t1 in FIG. 6, the integral electric energy calculated is less than the electric energy indicated by the dash-dotted line and a difference diff1 between the integral electric energy calculated and the integral electric energy indicated by the dash-dotted line is equal to or larger than the predetermined threshold, the electric power converter 14 updates the reference function to a line DLb having the maximum output at electric power P13 exceeding the electric power P10 that is the contracted electric power, as illustrated in FIG. 7B.

According to this embodiment, in a case where an electric power element connected to the alternating-current load 25 and the bus 30 is using electric power without reaching the contracted electric energy, that is, in a case where there is electric power to spare in electric power used and supplied from the electric power element 24, the electric power supplied to the bus 30 is able to be increased.

### Third Embodiment

A third embodiment of the present invention will be described next. An electric power system according to the third embodiment is different from that of the first embodiment in that the electric power converter 14 updates the reference function according to integral electric energy of electric power supplied from the electric power element 24 to the bus 30 and the alternating-current load 25. Other components are the same as those of the first embodiment, these components that are the same as those of the first embodiment will be assigned with the same reference signs, description of these components will be omitted, and the following description will be on differences from the first embodiment.

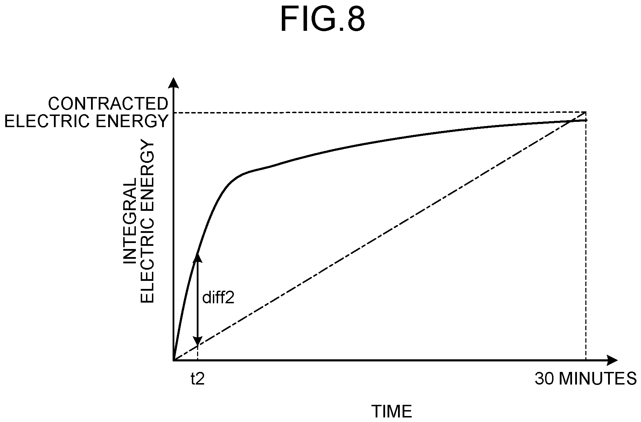

FIG. 8 is a graph illustrating an example of change in integral electric energy of electric power supplied from the electric power element 24 in 30 minutes. A dash-dotted line illustrated in FIG. 8 represents change in integral electric energy in a case where electric power from the electric power element 24 is consumed at constant power consumption such that electric energy supplied by the electric power element 24 equals contracted electric energy of the electric power system 1.

As illustrated in FIG. 8, in a case where the total integral electric energy for the bus 30 and the alternating-current load 25 is more than that upon the consumption of the electric power from the electric power element 24 at the constant power consumption such that the electric energy supplied by the electric power element 24 equals the contracted electric energy, the update unit 100cc of the electric power converter 14 updates the maximum output defined by the reference function.

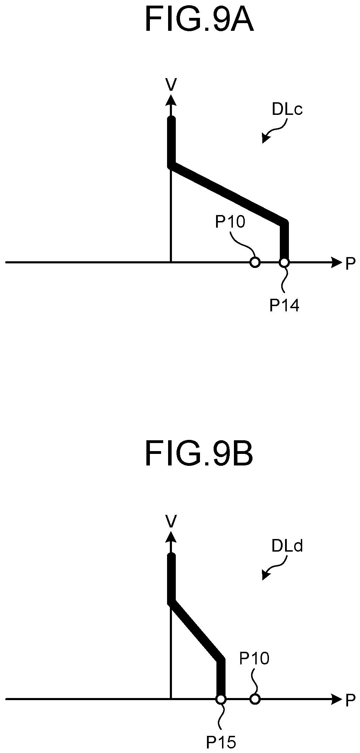

Specifically, the electric power converter 14 resets the integral electric energy every time 30 minutes elapse and updates the reference function to a reference function illustrated in FIG. 9A. The reference function illustrated in FIG. 9A is a reference function on a line DLc having the maximum output at electric power P14 exceeding the electric power P10 that is the contracted electric power. Subsequently, the electric power converter 14 obtains the electric energy consumed by the alternating-current load 25 from the EMS 40 on a predetermined cycle. Furthermore, the electric power converter 14 calculates electric energy supplied from the electric power element 24 to the bus 30 on a predetermined cycle on the basis of a measurement result from the sensor 100b. Subsequently, on the basis of electric energy consumed by the alternating-current load 25 and obtained since resetting of the integral electric energy and the electric energy supplied from the electric power element 24 to the bus 30 and obtained by calculation, the electric power converter 14 calculates integral electric energy of electric power supplied by the electric power element 24 since the resetting of the integral electric energy and generates a graph representing change in the integral electric energy. Every time the electric power converter 14 calculates integral electric energy, the electric power converter 14 calculates a difference between the latest integral electric energy calculated and the integral electric energy represented by the dash-dotted line at the time point of that calculation, and updates the maximum output defined by the reference function if the difference calculated is equal to or larger than a predetermined threshold.

FIG. 9B is a diagram illustrating an example of the reference function of the electric power converter 14, the reference function having been updated. For example, if, at a time point t2 in FIG. 8, the calculated integral electric energy is more than the electric energy indicated by the dash-dotted line and a difference diff2 between the calculated integral electric energy and the integral electric energy indicated by the dash-dotted line is equal to or larger than the predetermined threshold, the electric power converter 14 updates the reference function to a line DLd having the maximum output at electric power P15 less than the electric power P10 that is the contracted electric power, as illustrated in FIG. 9B.

According to this embodiment, in a case where an electric power element connected to the alternating-current load 25 and the bus 30 is using electric power so that the contracted electric energy is exceeded, that is, in a case where there is no electric power to spare in electric power used and supplied from the electric power element 24, the electric power supplied to the bus 30 is able to be reduced and peak shaving is thereby achieved.

In this third embodiment, the reference function at the time the integral electric energy is reset may be the reference function illustrated in FIG. 4. In a case where the integral electric energy is more than the electric energy indicated by the dash-dotted line and the difference diff2 between the integral electric energy and the integral electric energy indicated by the dash-dotted line is equal to or larger than the predetermined threshold when the reference function is the reference function illustrated in FIG. 4, the electric power converter 14 may update the reference function having the maximum output at electric power that is further less than the electric power P12.

### Modified Examples

Embodiments of the present invention have been described above, but without being limited to the above described embodiments, the present invention can be implemented in various other modes. For example, the above described embodiments may be modified as described below to implement the present invention. The above described embodiments and the following modified examples may be combined with one another. The present invention also includes those formed by combination of any of the components of the above described embodiments and the following modified examples as appropriate. Furthermore, further effects and modified examples can be readily derived by those skilled in the art. Therefore, wider aspects of the present invention are not limited to the above described embodiments and the modified examples, and various modifications can be made.

In the above described embodiments, the alternating-current load 25 is connected to the electric power element 24, but a configuration having the alternating-current load 25 not connected to the electric power element 24 may be adopted instead. In this case, in the electric power converter 14 according to the first embodiment, even if the alternating-current load 25 is not connected to the electric power element 24, the reference function may be set so that the maximum output defined by the reference function becomes electric power less than the electric power P10. Furthermore, in the case where the alternating-current load 25 is not connected to the electric power element 24, in the electric power converter 14 according to the second embodiment also, the reference function may be set so that the maximum output defined by the reference function at the time the integral electric energy is reset becomes electric power less than the electric power P10.

In the above described second embodiment and third embodiment, the integral electric energy is reset every 30 minutes but the integral electric energy may be reset at time intervals other than 30-minute intervals.

In the above described embodiments, the reference function is updated by use of the rated electric power of the alternating-current load 25, but electric power consumed by the alternating-current load 25 may be measured by the smart meter M2 and the reference function may be updated so that the maximum output of the reference function becomes "electric power P10 - electric power consumed by the alternating-current load 25 and measured by the smart meter M2".

In the above described first embodiment, the reference function is updated so that the electric power P12 that is the maximum output defined by the reference function becomes "electric power P10 - electric power P11", but a method of updating the reference function is not to be limited to this method. According to the present invention, the reference function of the electric power converter 14 may be updated on the basis of demand prediction information transmitted from the external server 50. In this case, the EMS 40 obtains demand prediction information on electric power for the alternating-current load 25 from the external server 50 and updates the reference function of the electric power converter 14 on the basis of the demand prediction information obtained. For example, in a case where a demand for electric power at the alternating-current load 25 is predicted to be large, the maximum output defined by the reference function may be made equal to electric power less than the electric power P12, and in a case where a demand for electric power at the alternating-current load 25 is predicted to be small, the maximum output defined by the reference function may be made equal to electric power larger than the electric power P12. The EMS 40 transmits reference function information representing the updated reference function to the electric power converter 14 and the electric power converter 14 stores the reference function information transmitted, into the storage unit 100cd. Furthermore, according to the present invention, demand prediction information may be transmitted from the EMS 40 to the electric power converter 14 and the update unit 100cc may perform the update of the reference function based on the demand prediction information instead of the EMS 40.

In the above described first embodiment, the reference function is updated so that that the electric power P12 that is the maximum output defined by the reference functions becomes "electric power P10 - electric power P11", but a method of updating the reference function is not to be limited to this method. The electric power converter 14 may update the reference function by using, for example, information on electric energy transmitted from the smart meters M1 and M2, the information being included in a command signal transmitted from the EMS 40.

Specifically, the update unit 100cc of the electric power converter 14 predicts electric energy consumed by the alternating-current load 25 from the information on the electric energy transmitted by the smart meter M2. For example, the update unit 100cc generates a graph of change in integral electric energy for the alternating-current load 25 from the information on the electric energy transmitted from the smart meter M2, similarly to the second embodiment or the third embodiment. The update unit 100cc extrapolates the graph of the change in the integral electric energy for the alternating-current load 25 at the above described time point t1 or at a time point earlier than the time point t1 to predict the integral electric energy of a time point 30 minutes after resetting of the integral electric energy.

In a case where the predicted integral electric energy for the time point 30 minutes later is less than the integral electric energy indicated by the dash-dotted line in FIG. 6 or FIG. 8, the update unit 100cc updates the reference function stored in the storage unit 100cd to a reference function defining maximum output larger than the electric power P10. In this case, the update unit 100cc may update the reference function so that the difference between the maximum output defined and the electric power P10 becomes larger as the difference between the integral electric energy indicated by the dash-dotted line and the predicted integral electric energy becomes larger.

Furthermore, in a case where the predicted integral electric energy for the time point 30 minutes later is more than the integral electric energy indicated by the dash-dotted line in FIG. 6 or FIG. 8, the update unit 100cc updates the reference function stored in the storage unit 100cd to a reference function defining maximum output less than the electric power P10. In this case, the update unit 100cc may update the reference function so that the difference between the maximum output defined and the electric power P10 becomes larger as the difference between the integral electric energy indicated by the dash-dotted line and the predicted integral electric energy becomes larger.

In the above described second embodiment, in a case where the calculated integral electric energy is more than the electric energy indicated by the dash-dotted line in FIG. 6 and the difference between the calculated integral electric energy and the integral electric energy indicated by the dash-dotted line is equal to larger than the predetermined threshold, the reference function stored in the storage unit 100cd may be updated to a reference function having the maximum output smaller than the electric power P12. Furthermore, in the above described third embodiment, in a case where the calculated integral electric energy is less than the electric energy indicated by the dash-dotted line in FIG. 8 and the difference between the calculated integral electric energy and the integral electric energy indicated by the dash-dotted line is equal to larger than the predetermined threshold, the reference function stored in the storage unit 100cd may be updated to a reference function having the maximum output larger than the electric power P14.

Furthermore, according to the present invention, the electric power converter 14 may reset the integral electric energy every time 30 minutes elapse and update the reference function to a reference function having the maximum output at the electric power P10. In this case, if the calculated integral electric energy is more than the electric energy indicated by the dash-dotted line in FIG. 6 and a difference between the calculated integral electric energy and the integral electric energy indicated by the dash-dotted line is equal to or larger than the predetermined threshold, the update unit 100cc may update the reference function stored in the storage unit 100cd to a reference function having the maximum output smaller than the electric power P10, and if the calculated integral electric energy is less than the electric energy indicated by the dash-dotted line in FIG. 6 and the difference between the calculated integral electric energy and the integral electric energy indicated by the dash-dotted line is equal to or larger than the predetermined threshold, the update unit 100cc may update the reference function stored in the storage unit 100cd to a reference function having the maximum output larger than the electric power P10.

### Industrial Applicability

The present invention can be used for an electric power converter, an electric power system, and a method of controlling the electric power converter.

### Reference Signs List

1 ELECTRIC POWER SYSTEM
11, 12, 13, 14 ELECTRIC POWER CONVERTER
21, 22, 23, 24 ELECTRIC POWER ELEMENT
25 ALTERNATING-CURRENT LOAD
30 BUS
40 EMS
100a ELECTRIC POWER CONVERSION UNIT
100b SENSOR
100c, 41 CONTROL UNIT
100ca OPERATION QUANTITY SETTING UNIT
100cb DETERMINATION UNIT
100cc UPDATE UNIT
100cd, 42 STORAGE UNIT
100d, 43 COMMUNICATION UNIT
DLa, DLb, DLc, DLd LINE
EV ELECTRIC VEHICLE
M1, M2 SMART METER
NW NETWORK

## Claims

1. An electric power converter, comprising:
an electric power conversion unit configured to convert alternating-current power input from an electric power element, which supplies the alternating-current power, into direct-current power to output the input direct-current power to a direct-current bus;
a control unit configured to control the electric power conversion unit to execute control of an output from the electric power conversion unit, based on a reference function having a drooping characteristic defined according to an input value and on either voltage or electric power in a bus to which the electric power conversion unit is connected; and
an update unit configured to update the reference function, wherein
the update unit is configured to update a maximum output of the electric power conversion unit, based on contracted electric power of the electric power element and on electric power of an alternating-current load that consumes the alternating-current power supplied by the electric power element, the maximum output being defined by the reference function.

2. The electric power converter according to claim 1, wherein the update unit is configured to update the maximum output of the electric power conversion unit, according to integral electric energy of electric power supplied by the electric power element to the electric power conversion unit and the alternating-current load, the maximum output being defined by the reference function.

3. The electric power converter according to claim 2, wherein the update unit is configured to increase the maximum output of the electric power conversion unit when the integral electric energy is less than contracted electric energy of the electric power element, the maximum output being defined by the reference function.

4. The electric power converter according to claim 2 or claim 3, wherein the update unit is configured to decrease the maximum output of the electric power conversion unit when the integral electric energy is more than contracted electric energy of the electric power element, the maximum output being defined by the reference function.

5. The electric power converter according to claim 1, wherein the electric power of the alternating-current load is electric power determined based on a predicted demand at the alternating-current load.

6. An electric power system, comprising:
the electric power converter according to any one of claims 1 to 5;
a direct-current bus to which the electric power converter is connected;
a direct-current power converter that is connected to the direct-current bus, the direct-current power converter being configured to convert direct-current power input from the direct-current bus to output the converted direct-current power; and
an electric power element connected to the direct-current power converter and capable of supplying electric power, consuming electric power, or being charged with electric power.

7. A method of controlling an electric power converter comprising: an electric power conversion unit configured to convert alternating-current power input from an electric power element, which supplies the alternating-current power, into direct-current power to output the input direct-current power to a direct-current bus; a control unit configured to control the electric power conversion unit to execute control of an output from the electric power conversion unit, based on a reference function having a drooping characteristic defined according to an input value and on either voltage or electric power in a bus to which the electric power conversion unit is connected; and an update unit configured to update the reference function, the method comprising
updating a maximum output of the electric power conversion unit, based on contracted electric power of the electric power element and on electric power of an alternating-current load that consumes the alternating-current power supplied by the electric power element, the maximum output being defined by the reference function.
